# EUROPEAN PATENT APPLICATION

(11) **EP 4 628 299 A1**
(43) Date of publication of application: **08.10.2025**
(21) Application number: 23898295.3
(22) Date of filing: 29.11.2023
(51) Int. Cl.: B32B 27/08, B32B 27/32, B32B 27/20, C08L 23/08, C08L 23/14, C08J 5/18

(54) **POLYOLEFIN-BASED STRETCH FILM**

(30) Priority: 29.11.2022 KR 20220162465
(71) Applicant: Lotte Chemical Corporation, Seoul 05551 (KR)
(72) Inventor: MOON, Yun A, Daejeon 34110 (KR); OH, Sun Hyung, Daejeon 34110 (KR); KIM, Song Ho, Daejeon 34110 (KR); CHO, Jin Ju, Daejeon 34110 (KR)
(74) Representative: Germain Maureau
(86) International application number: PCT/KR2023/019444
(87) International publication number: WO 2024/117769

(57) **Abstract**

Disclosed in the present invention is a stretch film having enhanced physical properties and packaging performance to be capable of replacing existing PVC-based stretch films. The present invention provides a stretch film both skin layers and a core layer that are stacked, wherein the skin layers contain ethylene vinyl acetate (EVA) and an antifogging agent, and the core layer contains a propylene terpolymer, a polyolefin elastomer (POE), and a hydrocarbon resin (HCR), thereby achieving excellent film formability, excellent film properties including excellent elongation of 700% or more at break, a tensile strength of 2 kgf/mm² or more, an elastic modulus (Young's modulus) of 8 kgf/mm² or less, a cling force of 10 N or more, and a haze of 2% or less, and excellent blocking performance, excellent antifogging properties, excellent adherence, and excellent workability, in association with the packaging performance.

## Description

### TECHNICAL FIELD

### Cross-reference to Related Applications

This application claims the priority and interest of Korean Patent Application No. 10-2022-0162465 filed on November 29, 2022, and the full text of this application is included herein as a reference.

### Technical Field

The present invention relates to a stretch film, and more specifically, relates to a polyolefin-based stretch film that can replace a polyvinyl chloride (PVC)-based stretch film.

### BACKGROUND ART

A stretch film made of a PVC material is an excellent resin in terms of price and performance, and it is widely used worldwide as a material for food or product packaging due to having excellent softness, excellent adhesiveness, excellent transparency, and good formability. In the case of PVC, additives such as a plasticizer and a stabilizer are used to impart functionality depending on the product characteristics; however, in a case of a phthalate plasticizer, legal regulations have been strengthened as the phthalate-based plasticizer has been known to be harmful to the human body. In addition, hazardous substances may leak out in a case where PVC is landfilled, and the chlorine in PVC may cause the generation of pollutants such as dioxin and hydrogen chloride in a case of being incinerated. In addition, there is a problem in that the strength of the product decreases in a case of being mixed with other synthetic resins and recycled, and thus it cannot be recycled and thus is classified as 'general waste'.

Currently, stretch films made of a polyethylene (PE) material have been used instead of PVC for household purposes since the early 2000s, and in accordance with the Ministry of Environment's Resource Recycling Act, the use of PVC stretch films has been prohibited in large supermarkets and the like since December 2019, and the use of PVC packaging materials in large supermarkets is scheduled to be completely banned from 2024. However, commercialized stretch films made of PE materials have problems in that elasticity and cling force are markedly low as compared with those of PVC, and thus the application of regulations is being postponed, particularly for packaging of livestock products or fishery products, which have a high moisture content. Stretch films made of PE material are limitedly used only for packaging of a part of cooked foods having a low moisture content; however, these also have problems in that physical properties such as adhesiveness, elasticity, stretchability, and transparency are inferior.

The physical properties required for the use of existing stretch films include film adhesiveness, film adherence, tensile strength, elongation, elastic modulus (Young's modulus), transparency, antifogging properties, and the like. In particular, a PVC-based stretch film is at a much higher level than a PE-based stretch film in terms of adhesiveness and antifogging properties, and the improvement in these two physical properties is currently required in the direction of development of polyolefin (PO)-based stretch films.

### Patent Document

Korean Patent Registration No. 10-1384507 (2014.04.04)

### DISCLOSURE OF THE INVENTION

### TECHNICAL PROBLEM

The present invention has been designed to solve such a problem that existing PE-based stretch films cannot be used for packaging livestock products or fishery products, which have a high moisture content due to the poor adhesiveness and antifogging properties thereof, and the present invention aims to provide a polyolefin-based stretch film having improved physical properties such as adhesiveness, antifogging properties, elongation, and tensile strength so that it can replace the PVC-based stretch film.

### TECHNICAL SOLUTION

In order to solve the above problems, the present invention provides a polyolefin-based stretch film that is a stretch film stacked with both skin layers and a core layer, wherein the skin layer contains ethylene vinyl acetate (EVA) and an antifogging agent, and the core layer contains a propylene terpolymer (Ter-PP), a polyolefin elastomer (POE), a hydrocarbon resin (HCR), and an antifogging agent.

In addition, the present invention provides the polyolefin-based stretch film, wherein in a stacked structure of the both skin layers and the core layer, a thickness ratio of the core layer is 60% to 80%.

In addition, the present invention provides the polyolefin-based stretch film, wherein the antifogging agent is one or more selected from the group consisting of sorbitan laurate, polyglyceryl monooleate, sorbitan monopalmitate, sorbitan monostearate, a polyoxyethylene alkyl amine, diglyceryl monooleate, diglyceryl monolaurate, a polyglyceryl fatty acid ester, diglyceryl monolaurate, an alkyl amine ester, and polyglycerine monopalmitate.

In addition, the present invention provides the polyolefin-based stretch film, wherein the ethylene vinyl acetate has a vinyl acetate content of 10% to 20% by weight and a melting index (190°C, 2.16 kg load) of 4 to 10 g/10 min, and the propylene terpolymer (Ter-PP) has an ethylene content of 2% to 4% by weight and a butene content of 2% to 5% by weight.

In addition, the present invention provides the polyolefin-based stretch film, wherein the core layer contains 60 to 75 parts by weight of the propylene terpolymer, 10 to 20 parts by weight of the polyolefin elastomer, and 5 to 20 parts by weight of the hydrocarbon resin.

In addition, the present invention provides the polyolefin-based stretch film, wherein the polyolefin-based stretch film has an elongation of 700% or more at break, has a tensile strength of 2 kgf/mm² or more, has an elastic modulus (Young's modulus) of 8 kgf/mm² or less, has a cling force of 10 N or more, and has a haze of 2% or less, where the elongation at break, the tensile strength, the elastic modulus, the cling force, the haze are measured according to the following methods.

### [Measurement method]

According to an ASTM D882 standard, the tensile strength and the elastic modulus (Young's modulus) of prepared test pieces are measured using a universal testing machine under a condition of 500 mm/min, the elongation until a test piece broken is measured under the same condition as the condition for the tensile strength measurement, the cling force is measured with a maximum load value obtained by overlapping three films having a thickness of 10 µm, subsequently preparing two sets of the films having a width of 2.5 cm and a length of 9.5 cm and overlapping the films of each set such that 2.5 cm of the width and 4 cm of the length are overlapped, thereby being stacked using a film coating machine, and then carrying out a 180 degree peel test method using a universal testing machine under a condition of 200 mm/min, and the haze is measured using a haze meter according to an ASTM D1003 standard.

In addition, the present invention provides the polyolefin-based stretch film, wherein the thickness of the stretch film is 10 to 12 µm.

### ADVANTAGEOUS EFFECTS

According to the present invention, it is possible to provide a polyolefin-based stretch film that can sufficiently replace the existing PVC-based stretch film since ethylene vinyl acetate (EVA) and an antifogging agent are contained as a skin layer component in a stretch film stacked with both skin layers and a core layer, and a propylene terpolymer, a polyolefin elastomer (POE), and a hydrocarbon resin (HCR) are contained as a core layer component, which allows to satisfy physical properties such as tensile strength, elongation at break, elastic modulus (Young's modulus), cling force, and haze which are required in a case of using the stretch film.

### MODE FOR CARRYING OUT THE INVENTION

Hereinafter, the present invention will be described in detail through exemplary embodiments. Prior to this, the terms and words, which are used in the present specification and the claims, are not to be restrictively construed in their ordinary or dictionary sense and are to be construed in the sense and with the concepts consistent with the technical ideas of the present invention based on the principle that an inventor may properly define concepts of terms to describe the present invention of the inventor in the best way. Therefore, the configuration of the exemplary embodiments described in the present specification is only the most preferred embodiment according to the present invention and does not represent all the technical ideas of the present invention, and it should be understood that there may be various equivalents and modified examples that can replace them at the time of filing this application.

The present invention discloses a polyolefin-based stretch film that is a stretch film stacked with both skin layers and a core layer, in which the skin layer contains ethylene vinyl acetate (EVA) and an antifogging agent, and the core layer contains a propylene terpolymer, a polyolefin elastomer (POE), and a hydrocarbon resin (HCR).

The above-described skin layer can impart adhesiveness to the stretch film by containing ethylene vinyl acetate (EVA). In this case, the higher the vinyl acetate (VA) content of EVA is, the more effective it is in improving the adhesiveness of the film and improving the transparency; however, in a case where the content thereof is excessive, there is a problem in that the workability during film forming deteriorates, and the blocking performance becomes strong after film winding, which makes it difficult for the end user to carry out handling. In consideration of this, the VA content in the EVA in the present invention may be 5% to 30% by weight and may be preferably 8% to 25% by weight and more preferably 10% to 20% by weight.

In addition, it is preferable that the EVA have a melting index (MI, 190°C and 2.16 kg load) of 4 to 10 g/10 min so that the stretch film can be formed into a thin film. In a case where the melting index (MI) is less than 4 g/10 min, the formation of the thin film of the stretch film is difficult, which may result in reduced workability, and In a case where the melting index (MI) exceeds 10 g/10 min, the tensile strength of the stretch film may be reduced, and the haze may also be inferior.

In the present invention, the antifogging agent is contained in the skin layer, which makes it possible to impart antifogging properties, which are properties that prevent water droplets from forming on the surface of the stretch film. The antifogging agent to be used may be any substance that is capable of imparting antifogging properties to the surface of the stretch film, and thus the antifogging agent is not limited to a specific substance; however, one or more selected from the group consisting of sorbitan laurate, polyglyceryl monooleate, sorbitan monopalmitate, sorbitan monostearate, a polyoxyethylene alkyl amine, diglyceryl monooleate, diglyceryl monolaurate, a polyglyceryl fatty acid ester, diglyceryl monolaurate, an alkyl amine ester, and polyglycerine monopalmitate may be used. The content of the antifogging agent is such that 0.01% by weight to 5% by weight may be contained and the content of the antifogging agent to be contained may be preferably 0.1% by weight to 5% by weight, and most preferably 1.0% by weight to 5% by weight based on the 100% by weight of the entire skin layer. In a case where the content of the antifogging agent to be contained is less than 0.01% by weight, the antifogging properties may be reduced, and in a case where the content of the antifogging agent to be contained is more than 5% by weight, the adhesiveness and transparency of the stretch film may be reduced.

In the present invention, the core layer contains a propylene terpolymer, a polyolefin elastomer (POE), a hydrocarbon resin (HCR), and the above-described antifogging agent so that the stretch film has an excellent balance of physical properties of elongation at break, tensile strength, and elastic modulus (Young's modulus).

The propylene terpolymer (Ter-PP) is a copolymer obtained by subjecting ethylene or α-olefin to copolymerization with propylene, and it is contained in the core layer to play a role in improving the elastic modulus, adherence, and cling force of the stretch film.

In the present invention, from this point of view, the propylene terpolymer (Ter-PP) may be a terpolymer obtained by subjecting ethylene and α-olefin to copolymerization with propylene. The α-olefin has 4 to 10 carbon atoms, and it may be, for example, 1-butene, 1-pentene, 1-hexene, 4-methyl-1-pentene, 1-heptene, 1-octene, 1-nonene, 1-decene, or the like, and it may be more preferably a terpolymer in which ethylene having a content of 2% to 4% by weight and 1-butene having a content of 2% to 5% by weight are copolymerized with propylene.

The polyolefin elastomer (POE) is an α-olefin copolymer resin, and it is contained in the core layer to play a role in improving the transparency and flowability of the stretch film.

In the present invention, from this point of view, the polyolefin elastomer (POE) may be a copolymer of propylene and an α-olefin having 2 to 10 carbon atoms other than the propylene, it may be preferably an ethylenepropylene rubber obtained by subjecting propylene to copolymerization with ethylene having a content of 5% to 20% by weight, it may be more preferably such that the ethylene content is 10% to 18% by weight and the polyolefin elastomer has a density of 0.85 to 0.9 g/cm³, and it may be most preferably such that the ethylene content is 14% to 17% by weight and the polyolefin elastomer has a density of 0.86 to 0.89 g/cm³.

The hydrocarbon resin (HCR) is a light yellow or blackish brown thermoplastic resin having a weight average molecular weight of 2,000 or less, which is obtained by polymerizing, as a raw material, high-grade unsaturated hydrocarbons present in high-temperature thermal decomposed oils such as naphtha using an acidic catalyst. It is contained in the core layer to play a role in improving the cling force and the transparency of the stretch film.

The description regarding the antifogging agent contained in the core layer is the same as the description regarding the antifogging agent contained in the skin layer. That is, as the antifogging agent, one or more selected from the group consisting of sorbitan laurate, polyglyceryl monooleate, sorbitan monopalmitate, sorbitan monostearate, a polyoxyethylene alkyl amine, diglyceryl monooleate, diglyceryl monolaurate, a polyglyceryl fatty acid ester, diglyceryl monolaurate, an alkyl amine ester, and polyglycerine monopalmitate may be used. The content of the antifogging agent is such that 0.01% by weight to 5% by weight may be contained and the content of the antifogging agent to be contained may be preferably 0.1% by weight to 5% by weight, and most preferably 1.0% by weight to 5% by weight based on the 100% by weight of the entire core layer. In a case where the content of the antifogging agent to be contained is less than 0.01% by weight, the antifogging properties may be reduced, and in a case where the content of the antifogging agent to be contained is more than 5% by weight, the adhesiveness and transparency of the stretch film may be reduced.

In the present invention, from this point of view, the hydrocarbon resin may have a molecular weight (Mw) of 400 to 800 and a softening point of 110°C to 150°C, and it may preferably have a molecular weight (Mw) of 500 to 700 and a softening point of 120°C to 130°C.

In addition, the core layer may contain 60 to 75 parts by weight of the propylene terpolymer, 10 to 20 parts by weight of the polyolefin elastomer, and 5 to 20 parts by weight of the hydrocarbon resin. The fact that the adhesiveness, the elastic modulus (Young's modulus), and the haze are improved in a case where these substances are contained at the above-described weight ratio can be confirmed through the evaluation of physical properties, which is carried out on the examples and comparative examples described below.

In the stacked structure of the both skin layers and the core layer, it is preferable that the thickness ratio of the core layer is 60% to 80%, and the thickness ratio of the upper layer and the thickness ratio of the lower layer equally contributes to the thickness ratio of the skin layers, where there are each 10% to 20%. In a case where the thickness ratio of the core layer is less than 60%, the thickness of the skin layers containing EVA increases, which improves the adhesiveness; however, it may be difficult to form a thin film, and the blocking performance of the film may also deteriorate. On the contrary, in a case where the thickness ratio of the core layer exceeds 80%, the thickness of the skin layers decreases, which may deteriorate the adhesiveness and antifogging properties.

The stretch film according to one exemplary embodiment of the present invention may have an elongation of 700% or more at break, may have a tensile strength of 2 kgf/mm² or more, may have an elastic modulus (Young's modulus) of 8 kgf/mm² or less, may have a cling force of 10 N or more, and may have a haze of 2% or less, and preferably, the stretch film according to one exemplary embodiment of the present invention may have an elongation of 650% or more at break, a tensile strength of 2.3 kgf/mm² or more, an elastic modulus (Young's modulus) of 7.5 kgf/mm² or less, a cling force of 10.5 N or more, and a haze of 1.8% or less. Due to the above-described physical properties, the packaging performance of the stretch film can be improved.

The stretch film stacked with the both skin layers and the core layer can be manufactured by a T-die extrusion method or a blown method known in the art, and preferably, it can be manufactured by carrying out lamination with three extruders using a T-die extrusion method.

Hereinafter, the present invention will be described in more detail through specific examples and comparative examples.

First, the specifications of the components used in the following examples and comparative examples are as shown in Table 1 below.

**[Table 1]**

| Component name | Detailed contents |
|---|---|
| EVA-1 | VA content: 10 to 20%, MI (ASTM D1238, 190°C, 2.16 kg load): 4 to 10 g/10min |
| EVA-2 | VA content: 10 to 20%, MI (ASTM D1238, 190°C, 2.16 kg load): 1 to 3 g/10min |
| PP-1 | Ter-PP, ethylene content: 2% to 4% by weight, butene content: 3.5% to 5% by weight |
| PP-2 | Ter-PP, ethylene content: 2% to 4% by weight, butene content: 2.5% to 4.5% by weight |
| PP-3 | H-PP(single propylene copolymer) |
| POE | Density: 0.862 g/cm³, ethylene content: 16% by weight |
| HCR | Softening point: 120°C to 130°C, Molecular weight (Mw) : 650 |
| Antifogging agent | Sorbitan laurate |

### Examples and Comparative Examples

Both skin layers and a core layer were constituted according to the compositions shown in Table 2 below, and they were formed under the following forming conditions according to a T-die method using a multilayer film forming machine to manufacture a stretch film having a thickness of 10 to 12 µm.

### [Forming conditions]

- Forming machine: A T-die forming machine having a diameter of 25 mm
- Screw L/D: 20
- Screw rpm: 20 to 50
- Forming temperature: 220°C to 250°C

**[Table 2]**

| Classification | | Example 1 | Example 2 | Comparative Example 1 | Comparative Example 2 | Comparative Example 3 | Comparative Example 4 | Comparative Example 5 | Compara tive Example 6 |
|---|---|---|---|---|---|---|---|---|---|
| Layer thickness ratio | | 1:4:1 | 1:4:1 | 1:2:1 | 1:4:1 | 1:4:1 | 1:4:1 | 1:4:1 | 1:4:1 |
| Skin layer Compositio n | EVA | EVA-1 | EVA-1 | EVA-1 | EVA-1 | EVA-1 | EVA-1 | EVA-1 | EVA-2 |
| | Antifogg ing agent (wt%) | 2 | 2 | 2 | 2 | 2 | 2 | 2 | 2 |
| Core layer compositio n | PP | PP-2 | PP-1 | PP-2 | PP-2 | PP-2 | PP-3 | PP-3 | PP-1 |
| | (wt%) | 70 | 60 | 70 | 80 | 85 | 65 | 60 | 60 |
| | PP | - | PP-3 | - | - | - | - | PP-1 | PP-3 |
| | (wt%) | - | 5 | - | - | - | - | 5 | 5 |
| | POE | POE | POE | POE | POE | - | POE | POE | POE |
| | (wt%) | 15 | 20 | 15 | 20 | - | 20 | 20 | 20 |
| | HCR | HCR | HCR | HCR | - | HCR | HCR | HCR | HCR |
| | (wt%) | 15 | 15 | 15 | - | 15 | 15 | 15 | 15 |

### Test Example

The physical properties and packaging performance of the manufactured film were measured and evaluated according to the following methods, and the results are shown in Table 3 below.

### [Method for measuring physical properties]

- Film formability: It was checked whether the skin layer and core layer of the film could be formed into a thin film and where the formation was possible without problems such as stickiness or cuttability during film forming, and then a case where the formation of the thin film was possible and there were no problems in stickiness or cutting during the process, was evaluated as "⊚", a case where although the formation of the thin film was possible, there were problems in stickiness or cutting during the process, was evaluated as "∘", and a case where there were problems in the formation of the thin film was evaluated as "△".
- Elongation at break, tensile strength, and elastic modulus (Young's modulus): Using a universal testing machine (UTM, Instron), a test piece was prepared according to an ASTM D882 standard, and then the measurements were carried out under a condition of 500 mm/min.
- Cling Force: Due to the absence of the ASTM standards, a simple evaluation was carried out according to the measurement standards of domestic film companies. Three films having a thickness of 10 µm were overlapped, two sets of the films having a width of 2.5 cm and a length of 9.5 cm were subsequently prepared and the films of each set were overlapped such that 2.5 cm of the width and 4 cm of the length were overlapped, thereby being stacked using a film coating machine, and then a 180 degree peel test method was carried out using a universal testing machine (UTM) under a condition of 200 mm/min, and then a maximum load was measured.
- Haze (cloudiness): The haze was measured using a haze meter (NDH-5000 model, Nippon Denshoku Industries Co., Ltd.) according to the ASTM D1003 standard.

### [Evaluation method for packaging performance]

- Blocking characteristics: It was checked whether the appearance of a film was maintained and the film was easily peeled off in a case where a worker pulled out the film that had been wound around a paper pipe, and then a case where the film was easily peeled off and the appearance of the film was maintained was evaluated as "⊚", a case where the film was easily peeled off but the appearance of the film was not maintained was evaluated as "∘", and a case where the film was not easily peeled off was evaluated as "△".
- Antifogging properties: Th antifogging properties were evaluated in a low-temperature environment and a high-temperature environment as an item for checking whether water droplets formed inside the film and deteriorated the aesthetics of the product. Specifically, for a low-temperature environment, a beaker was filled with an appropriate amount of water (ordinary temperature), covered with a film, subjected to cold storage for 6 minutes, and then it was checked whether water was condensed on the film. In addition, for a high-temperature environment, a beaker was filled with water of 80°C, covered with a film, cooled at ordinary temperature for 6 minutes, and then it was checked whether water was condensed on the film. A case where water was not condensed in the low-temperature and high-temperature environment was evaluated as "⊚", a case where although water was not condensed in the low-temperature environment, water was condensed in the high-temperature environment was evaluated as "∘", and a case where water was condensed in the low-temperature environment was evaluated as "△".
- Adherence: The adherence is a property that is determined in conjunction with the cling force, and it was determined that the adherence was poor in a case where a part where the film was clumped up on the back surface was swollen like popcorn after packaging a product. Specifically, in a case where a styrofoam object having a rectangular shape having a width of 20 cm, a length of 12 cm, and a height of 4 cm was used for film packaging and then observed after 5 minutes, a case where the back surface where the films were overlapped was not swollen at all was evaluated as "⊚", a case where although partial swelling was observed, 50% or more of the outermost end portion of the film was attached was evaluated as "∘", and a case where overall swelling was observed, and 50% or more of the end portion of the film was detached was evaluated as "△".
- Workability: The degree of the overall workability of the worker during the film packaging process was totaled, and then a case of good workability was evaluated as "⊚", "∘", and a case of poor workability was evaluated as "△".

**[Table 3]**

| Classification | | Exampl e 1 | Exampl e 2 | Compara tive Example 1 | Compara tive Example 2 | Compara tive Example 3 | Compara tive Example 4 | Compara tive Example 5 | Compara tive Example 6 | PVC film | Domestic PO film | Product from leading company |
|---|---|---|---|---|---|---|---|---|---|---|---|---|
| Measu remen t of physi cal prope rties | Film formability | ⊚ | ⊚ | △ | ⊚ | ⊚ | ⊚ | ⊚ | △ | - | - | - |
| | Elongation at break(%) | 720 | 740 | 680 | 700 | 730 | 600 | 620 | 700 | 400 | 795 | 710 |
| | Tensile strength (kgf/mm²) | 2.5 | 2.4 | 1.8 | 2.4 | 2.8 | 2.8 | 2.8 | 2.2 | 3 | 3.2 | 2.5 |
| | Elastic modulus (kgf/mm²) at 5% Strain | 6.5 | 7 | 6.5 | 5.8 | 11 | 11.5 | 11 | 7.1 | 7.8 | 11.4 | 8.2 |
| | Cling force (N) | 11.5 | 11.9 | 13 | 9 | 10 | 10.2 | 10.2 | 10.3 | 15 | 10 | 14 |
| | Haze (%) | 1.5 | 1.1 | 1.1 | 2.2 | 2.3 | 1.8 | 1.8 | 1.6 | 1 | 1.8 | 1.3 |
| Evalu ation of packa ging perfo rmanc e | Blocking performance | ⊚ | ⊚ | △ | ⊚ | ○ | ⊚ | ⊚ | ⊚ | ⊚ | ⊚ | ⊚ |
| | Antifogging properties | ⊚ | ⊚ | ⊚ | ⊚ | ⊚ | ⊚ | ⊚ | ⊚ | ⊚ | ○ | ⊚ |
| | Adherence | ⊚ | ⊚ | ○ | ○ | ○ | △ | △ | ○ | ⊚ | △ | ⊚ |
| | Workability | ⊚ | ⊚ | ○ | △ | △ | △ | △ | ○ | ⊚ | ○ | ⊚ |

With reference to Table 3, it can be confirmed that each of the stretch films according to Examples 1 and 2 has excellent film formability, has an elongation of 700% or more at break, has a tensile strength of 2 kgf/mm² or more, has an elastic modulus (Young's modulus) of 8 kgf/mm² or less, has a cling force of 10 N or more, and has a haze of 2% or less, and as a result, the physical properties of the film are excellent, the blocking performance, the antifogging properties, the adherence, and the workability are favorable, and thus the packaging performance is excellent. In addition, it can be confirmed that each of the stretch films according to Examples 1 and 2 has a low elastic modulus (Young's modulus) as compared with the existing PVC-based films, the domestic PO-based films, and the products from leading companies, thereby having more excellent packaging performance and also having other physical properties that are equivalent or more excellent.

On the contrary, in a case where the thickness of the skin layers increases (Comparative Example 1), it can be confirmed that although the physical properties of the cling force are improved as compared with Example 1 due to the increase in the thickness of the EVA layer, the workability and blocking performance are reduced since the film is difficult to be formed into a thin film.

In addition, in a case where there is no hydrocarbon resin in the core layer (Comparative Example 2), it can be confirmed that the haze is high and the cling force is somewhat reduced as compared with Example 1, which results in decreased workability.

In addition, in a case where there is no POE in the core layer (Comparative Example 3), it can be confirmed that the haze is high, the cling force is slightly reduced, and the elastic modulus (Young's modulus) is high as compared with Example 1, which results in reduced workability.

In addition, in a case where the core layer is composed of a single propylene polymer (H-PP) rather than Ter-PP (Comparative Example 4), it can be confirmed that although the tensile strength is excellent as compared with Example 2, the film has insufficient softness, and thus the elastic modulus (Young's modulus) increases and the adherence and the cling force decrease.

In addition, in Comparative Example 5, although the physical properties in a case where Ter-PP is partially added in Comparative Example 4 have been checked, it can be confirmed that the tendency of the physical properties is similar to that of Comparative Example 4.

In addition, although Comparative Example 6 and Example 2 are the same in terms of the configuration of the core layer, the physical properties in a case where the range of the melting index (MI) of EVA in the skin layer is changed are checked. However, due to the low melting index (MI) as compared with Example 2, the formation of the thin film is difficult, which may reduce workability.

As described above, the polyolefin-based stretch film according to the present invention has a stacked structure of both skin layers and a core layer, where the skin layer contains ethylene vinyl acetate (EVA) and an antifogging agent, and the core layer contains a propylene terpolymer, a polyolefin elastomer (POE), and a hydrocarbon resin (HCR) as a core layer component, whereby the polyolefin-based stretch film according to the present invention exhibits excellent film formability, an excellent elongation at break, an excellent tensile strength, an excellent elastic modulus (Young's modulus), an excellent cling force, and an excellent haze regarding the physical properties of the film, and exhibits excellent blocking performance, excellent antifogging properties, excellent adherence, and excellent workability regarding the packaging performance so that it is capable of replacing the existing PVC-based stretch films.

The preferred exemplary embodiments according to the present invention described above have been disclosed to solve the technical problems, and those skilled in the art to which the present invention belongs will be able to make various modifications, changes, additions, and the like within the spirit and scope of the present invention, where such modifications, changes, and the like should be considered to fall within the scope of the following patent claims.

## Claims

1. A polyolefin-based stretch film that is a stretch film composed of both skin layers and a core layer that are stacked,
wherein the skin layer contains ethylene vinyl acetate (EVA) and an antifogging agent, and
the core layer contains a propylene terpolymer (Ter-PP), a polyolefin elastomer (POE), a hydrocarbon resin (HCR), and an antifogging agent.

2. The polyolefin-based stretch film of claim 1, wherein in a stacked structure of the both skin layers and the core layer, a thickness ratio of the core layer is 60% to 80%.

3. The polyolefin-based stretch film of claim 1, wherein the antifogging agent is one or more selected from the group consisting of sorbitan laurate, polyglyceryl monooleate, sorbitan monopalmitate, sorbitan monostearate, a polyoxyethylene alkyl amine, diglyceryl monooleate, diglyceryl monolaurate, a polyglyceryl fatty acid ester, diglyceryl monolaurate, an alkyl amine ester, and polyglycerine monopalmitate.

4. The polyolefin-based stretch film of claim 1,
wherein the ethylene vinyl acetate has a vinyl acetate content of 10% to 20% by weight and a melting index (190°C, 2.16 kg load) of 4 to 10 g/10 min, and
the propylene terpolymer (Ter-PP) has an ethylene content of 2% to 4% by weight and a butene content of 2% to 5% by weight.

5. The polyolefin-based stretch film of claim 1, wherein the core layer contains 60 to 75 parts by weight of the propylene terpolymer, 10 to 20 parts by weight of the polyolefin elastomer, and 5 to 20 parts by weight of the hydrocarbon resin.

6. The polyolefin-based stretch film of claim 1, wherein the polyolefin-based stretch film has an elongation of 700% or more at break, has a tensile strength of 2 kgf/mm² or more, has an elastic modulus (Young's modulus) of 8 kgf/mm² or less, has a cling force of 10 N or more, and has a haze of 2% or less, where the elongation at break, the tensile strength, the elastic modulus, the cling force, the haze are measured according to the following methods:
[Measurement method]
according to an ASTM D882 standard, the tensile strength and the elastic modulus (Young's modulus) of prepared test pieces are measured using a universal testing machine under a condition of 500 mm/min, the elongation until a test piece broken is measured under the same condition as the condition for the tensile strength measurement, the cling force is measured with a maximum load value obtained by overlapping three films having a thickness of 10 µm, subsequently preparing two sets of the films having a width of 2.5 cm and a length of 9.5 cm and overlapping the films of each set such that 2.5 cm of the width and 4 cm of the length are overlapped, thereby being stacked using a film coating machine, and then carrying out a 180 degree peel test method using a universal testing machine under a condition of 200 mm/min, and the haze is measured using a haze meter according to an ASTM D1003 standard.

7. The polyolefin-based stretch film of claim 1, wherein the thickness of the stretch film is 10 to 12 µm.
